# EUROPÄISCHE PATENTSCHRIFT

(11) **EP 2 449 277 B1**
(45) Veröffentlichungstag und Bekanntmachung des Hinweises auf die Patenterteilung: **09.09.2015**
(21) Anmeldenummer: 10742712.2
(22) Anmeldetag: 01.07.2010
(51) Int. Cl.: H02K 7/09, F16C 41/00, H02K 7/18

(54) **LAGER MIT ENERGIEERZEUGUNGSEINHEIT**
BEARING HAVING A POWER GENERATION UNIT
PALIER À UNITÉ DE PRODUCTION D'ÉNERGIE

(30) Priorität: 03.07.2009 DE 102009031609
(43) Veröffentlichungstag der Anmeldung: 09.05.2012
(73) Patentinhaber: Schaeffler Technologies AG & Co. KG, 91074 Herzogenaurach (DE)
(72) Erfinder: RINK, Thomas, 97705 Waldfenster (DE)
(86) Internationale Anmeldenummer: PCT/DE2010/000773
(87) Internationale Veröffentlichungsnummer: WO 2011/000365

(56) Entgegenhaltungen:
- JP-A- 1 284 573
- US-A- 5 204 653
- US-A- 5 385 410
- US-A- 5 850 141

## Beschreibung

### Gebiet der Erfindung

Die Erfindung betrifft ein Lager nach dem Oberbegriff von Anspruch 1.

Aus dem Stand der Technik sind Lager bekannt, die eine Energieerzeugungseinheit umfassen, die als Klauenpolgenerator ausgestaltet ist. Der Klauenpolgenerator umfasst eine Induktionsspule mit einem mit mehreren Windungen gewickelten elektrischen Leiter. Für eine auch bei geringen Drehzahlen ausreichende Spannungsversorgung soll die Induktionsspule einen hohen Füllfaktor aufweisen, also der elektrische Leiter möglichst eine hohe Anzahl von Windungen aufweisen.

US 5,385,410 offenbart ein Wälzlager mit den Merkmalen des Oberbegriffs vom Anspruch 1.

US 6,838,794 B2 beschreibt ein Wälzlager, mit einem ersten Lagerring, einem zweiten Lagerring, mehreren zwischen den beiden Lagerringen angeordneten Wälzkörpern und einer Energieerzeugungseinheit, die als Klauenpolgenerator ausgestaltet ist. Das Wälzlager umfasst hierzu weiter einen an dem ersten Lagerring befestigten ersten Klauenring mit einer entlang eines Umfangs des ersten Lagerrings umlaufenden Abfolge von ersten Klauen, einen an dem ersten Lagerring befestigten zweiten Klauenring mit einer entlang des Umfangs des ersten Lagerrings umlaufenden Abfolge von zweiten Klauen, und eine zwischen den beiden Klauenringen angeordnete magnetische Induktionsspule. Das Lager umfasst weiter eine entlang eines Umfangs des zweiten Lagerrings umlaufende, als Magnetring ausgebildete Abfolge von magnetischen Polen sowie eine zwischen den beiden Klauenringen angeordnete magnetische Induktionsspule, wobei sich von einem ersten magnetischen Pol des Magnetrings über eine erste Klaue des ersten Klauenrings und über eine zweite Klaue des zweiten Klauenrings ein geschlossener, die Induktionsspule umlaufender magnetischer Kreis zu dem bezüglich des ersten magnetischen Pols ungleichnamigen zweiten magnetischen Pol des Magnetrings schließt. Drehen sich die beiden Lagerringe relativ zueinander, ändert sich der magnetische Fluss in dem magnetischen Kreis, da jede Klaue an einem anderen Pol vorbeigeführt wird. Die zeitliche Änderung des magnetischen Flusses induziert in der Induktionsspule eine Wechselspannung, deren Betrag von der Anzahl der Windungen der Induktionsspule abhängt. Um eine möglichst hohe Induktionsspannung zu erzielen, ist insbesondere eine große Anzahl von Windungen für die Induktionsspule vorzusehen. Die Induktionsspule ist in einer im Querschnitt U-förmigen Aufnahme angeordnet, wobei die Schenkel des U durch die beiden Klauenringe gebildet sind, und wobei die beiden Klauenringe durch den Boden des U miteinander in magnetisch leitender Verbindung stehen, so dass der magnetische Fluss durch die erste Klaue in dem ersten Schenkel des U, dann durch den Boden des U und danach durch eine zweite Klaue in dem zweiten Schenkel des U geführt wird. Der Boden des U liegt an dem ersten Lagerring an und reduziert den Bauraum zwischen den beiden Lagerringen, der für die Aufnahme einer möglichst hohen Anzahl von Windungen der Induktionsspule zur Verfügung steht. Als Maßnahme zur Erhöhung der Anzahl der Windungen der Induktionsspule wird vorgeschlagen, jeweils eine Ausnehmung an den beiden gegenüberliegenden Lagerringen vorzusehen und die Induktionsspule sowie die Abfolge der magnetischen Pole in der jeweiligen Ausnehmung anzuordnen, so dass die Induktionsspule einen vergrößerten Platz einnehmen kann. Hierzu sind bauliche Veränderungen an den beiden Mantelflächen der beiden Lagerringe erforderlich.

US 2005/0174011 A1 beschreibt ein Wälzlager mit einem Klauenpolgenerator, wobei die als umlaufender Magnetring ausgebildete Abfolge der magnetischen Pole in einer Ausnehmung des zweiten Lagerrings angeordnet ist und die Induktionsspule im Querschnitt allseitig von den Blechzuschnitten der beiden Klauenringen umgeben abschnittsweise auf einer Stirnfläche des ersten Lagerrings aufsitzt bzw. abschnittsweise in einer in der Mantelfläche des ersten Lagerrings angeordneten Ausnehmung angeordnet ist.

JP 2006090501 AA (Abstract) beschreibt ein als Wälzlager ausgebildetes Lager mit einem ersten Lagerring, einem zweiten Lagerring, mehreren zwischen den beiden Lagerringen angeordneten Wälzkörpern, und einer als Klauenpolgenerator ausgestalteten Energieerzeugungseinheit mit einer von einem veränderlichen magnetischen Fluss umgebenen Induktionsspule. Beabstandet von dem ersten Lagerring sind entlang des Umfangs magnetisch leitende Klauen eines Klauenrings angeordnet. An dem ersten Lagerring ist eine entlang des Umfangs umlaufende Abfolge von magnetisierten und nicht-magnetisierten Abschnitten eines Magnetrings angeordnet. Die Induktionsspule ist mit einem ersten Abschnitt auf einer Stirnfläche des zweiten Lagerrings und mit einem zweiten Abschnitt an einer Ausnehmung in der Mantelfläche des zweiten Lagerrings angeordnet. Je nachdem, ob ein magnetisierter oder in nicht-magnetisierter Abschnitt der Klaue gegenübersteht, wird in der Induktionsspule ein Spannungssignal erzeugt. Der Magnetring mit den magnetischen Polen ist außerhalb des Lagers angeordnet. Die Induktionsspule steht über die Stirnflächen beider Lagerringe über, so dass ein erheblicher Platz beansprucht wird.

### Aufgabe der Erfindung

Es ist die Aufgabe der Erfindung, ein Lager mit einer im wesentlichen bauraumneutralen Energieerzeugungseinheit mit einem hohen Füllfaktor für die Induktionsspule anzugeben.

### Zusammenfassung der Erfindung

Diese Aufgabe wird durch ein Lager nach Anspruch 1 gelöst.

Das Schließen des magnetischen Kreises über die magnetisch leitenden Abschnitte der beiden Lagerringe sowie über den mindestens einen Wälzkörper des Wälzlagers ermöglicht es, nur einen Klauenring vorzusehen, über den das Magnetfeld in den ersten Lagerring eingeleitet wird. Ein zweiter Klauenring wird damit überflüssig, so dass in axialer Richtung, also entlang einer Drehachse des Wälzlagers, bzw. in radialer Richtung, also senkrecht zu der Drehachse des Wälzlagers, zusätzlicher Bauraum zur Verfügung steht, der für die Induktionsspule ausgenutzt werden kann, so dass der gewickelte elektrische Leiter der Induktionsspule eine hohe Anzahl von Windungen aufweist. Für die Induktionsspule steht im wesentlichen der gesamte Bauraum zwischen dem Wälzkörper und den Stirnflächen der beiden Lagerringe in axialer Richtung sowie zwischen den beiden Lagerringen in radialer Richtung zur Verfügung.

Sofern ein Grundkorpus eines der beiden Lagerringe aus einem magnetisch nicht oder nur schlecht leitenden Material wie Kunststoff oder Keramik ausgebildet sein, wird der jeweilige magnetisch leitende Abschnitt beispielsweise durch eine auf das Grundkorpus aufgebrachte Beschichtung oder durch eine an das Grundkorpus angebrachte Hülse aus einem magnetisch leitenden Material ausgebildet, wobei der Klauenring bzw. die magnetischen Pole dann mit der Beschichtung bzw. der Hülse in magnetisch leitende Verbindung gebracht werden.

Vorzugsweise ist vorgesehen, dass die Induktionsspule und die magnetischen Pole zu einer gemeinsamen Baueinheit zusammengefasst sind, die an dem zweiten Lagerring befestigt ist. Die Induktionsspule ist dabei in einer elektrisch isolierten Aufnahme aus beispielsweise Kunststoff aufgenommen. Die magnetischen Pole können ebenfalls in dem Kunststoff aufgenommen sein und zur Ausbildung der magnetisch leitenden Verbindung zu dem zweiten Lagerring an einem Rand des Kunststoffes angeordnet sein, so dass bei der Montage der Baueinheit die Magnete unmittelbar in magnetisch leitenden Kontakt zu einer Mantelfläche des zweiten Lagerrings gelangen. Der Kunststoff hält dabei die magnetischen Pole voneinander räumlich getrennt und magnetisch isoliert.

Vorzugsweise ist vorgesehen, dass der Klauenring ein kreisringförmiges Korpus mit einer radialen Schlitzung aufweist. Die radiale Schlitzung des Klauenrings unterdrückt Wirbelströme zwischen in Umfangsrichtung des Klauenrings benachbarten Klauen und erhöht die Wirksamkeit der magnetischen Flussführung durch die Klauen, die der Schlitzung benachbart sind. Weiter ermöglicht die Schlitzung, den Klauenring etwas zusammenzudrücken bzw. aufzuweiten und zwischen die beiden Lagerringe einzuführen, so dass der Klauenring unter mechanischer Vorspannung an dem Lagerring anliegt und insbesondere eine große Grenzfläche zu dem Lagerring ausgebildet wird, die die Führung des magnetischen Flusses aus oder in den den magnetischen Kreis schließenden Abschnitt des Korpus des ersten Lagerrings vereinfacht.

Vorzugsweise ist vorgesehen, dass ein magnetisch leitendes Kontaktelement vorgesehen ist. Das magnetisch leitende Kontaktelement verbessert die Führung des magnetischen Flusses an den sich zwischen den magnetischen Polen und dem Korpus des zweiten Lagerrings bzw. zwischen der ersten Klaue und dem Korpus des ersten Lagerrings ausbildenden Grenzflächen. Hinsichtlich der Ausbildung des magnetisch leitenden Kontaktelementes ist besonders bevorzugt vorgesehen, dass das magnetisch leitende Kontaktelement einen flüssigen oder pastösen Kleber, insbesondere einen Eisen- oder Ferritpartikel enthaltenden Kleber, umfasst.

Weitere Vorteile und Merkmale der Erfindung ergeben sich aus den abhängigen Ansprüchen sowie aus der Beschreibung eines bevorzugten Ausführungsbeispiels der Erfindung.

Die Erfindung wird im folgenden unter Bezugnahme auf die anliegenden Zeichnungen anhand eines bevorzugten Ausführungsbeispiels näher beschrieben und erläutert.

### Kurze Beschreibung der Zeichnungen

- Fig. 1: zeigt eine Explosionsdarstellung eines Ausführungsbeispiels eines erfindungsgemäßen Lagers, und
- Fig. 2: zeigt das Lager aus Fig. 1 in einer Querschnittsansicht.

### Detaillierte Beschreibung der Zeichnungen

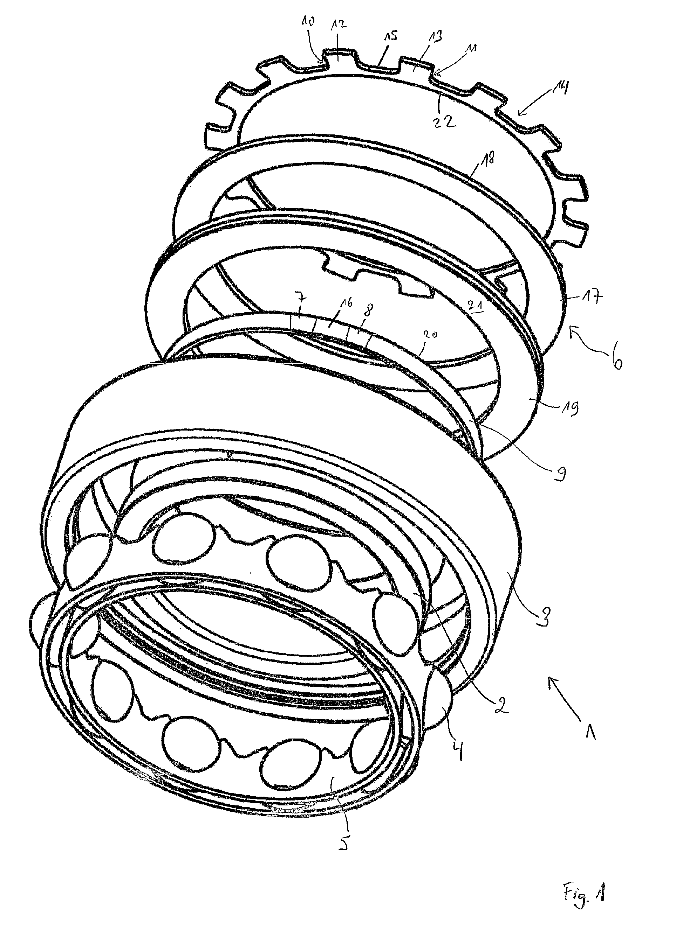

Fig. 1 zeigt ein als Wälzlager ausgebildetes Lager 1, das einen ersten, als Innenring des Lagers 1 ausgebildeten Lagerring 2 und einen zweiten, als Außenring des Lagers 1 ausgebildeten Lagerring 3 umfasst. Der erste Lagerring 2 nimmt eine bildlich nicht dargestellte Welle auf und lagert diese Welle drehbar bezüglich einer bildlich nicht dargestellten Lageraufnahme, an der der zweite Lagerring 3 fest angeordnet ist. Das Lager 1 umfasst weiter Wälzkörper 4, die in einem Käfig 5 zwischen den beiden Lagerringen 2, 3 angeordnet sind und eine Drehung des ersten Lagerrings 2 relativ zu dem zweiten Lagerring 3 ermöglichen.

Das Lager 1 umfasst weiter eine Energieerzeugungseinheit 6, die als Klauenpolgenerator ausgebildet ist.

Die Energieerzeugungseinheit 6 umfasst eine entlang eines Umfangs des zweiten Lagerrings 3 umlaufende Abfolge von magnetischen Polen, wobei zwei in Umfangsrichtung benachbarte, ungleichnamige Pole eines ersten Polpaars 7 und eines zweiten Polpaars 8 erkennbar sind. Die Pole sind magnetische Pole von Einzelmagneten, speziell radial gerichteten Stabmagneten, die in einem Magnetring 9 zusammengefasst sind, der an dem zweiten Lagerring 3 befestigt ist, wobei zwischen den in Umfangsrichtung benachbarten Polpaaren 7, 8 der Einzelmagnete ein magnetisch nicht-leitender Abschnitt 16 ausgebildet ist.

Die Energieerzeugungseinheit 6 umfasst weiter einen an dem ersten Lagerring 2 befestigten Klauenring mit einer entlang eines Umfangs des ersten Lagerrings 2 umlaufenden Abfolge von Klauen, wobei zwei in Umfangsrichtung benachbarte Klauen mit den Bezugszeichen 10, 11 ausgewiesen sind. Die Klauen 10, 11 des Klauenrings umfassen einen radial gerichteten, magnetisch leitenden Abschnitt 12, 13. Sämtliche Klauen des Klauenrings sind an einem ringförmigen Korpus 14 des Klauenrings ausgebildet, so dass jeweils benachbarte Klauen 10, 11 mittels eines Zwischenabschnittes 15 verbunden sind. Dabei besteht das gesamte Korpus 14 des Klauenrings aus einem magnetisch leitenden Material, aus dem die Klauen 10, 11 als radiale Abschnitte 12, 13 freigestellt, beispielsweise herausgefräst, geschnitten oder gestanzt, sind.

Die Energieerzeugungseinheit 6 umfasst weiter eine Induktionsspule 17, die einen bildlich nicht dargestellten, elektrischen Leiter umfasst, der mit mehreren Windungen entlang des Umfangs der Lagerringe 2, 3 angeordnet ist. Der elektrische Leiter ist in einer Matrix aus einem elektrisch isolierenden Material, insbesondere einen Lack, aufgenommen, so dass ein ringscheibenförmiges Korpus entsteht, das an der äußeren Umfangsfläche eine Spulennut 18 aufweist.

Die Induktionsspule 17 ist in einer kreisringförmigen Aufnahme 19 aus einem elektrisch isolierenden Material wie Kunststoff aufgenommen. Hierzu weist die Aufnahme 19 einen U-förmigen Querschnitt auf, so dass die Induktionsspule 17 in die Öffnung des U eingeführt ist.

Der Magnetring 9 ist mit einer Stirnfläche 20 auf einer Schenkelfläche 21 nahe der inneren Berandung der Aufnahme 19 befestigt; insbesondere ist der Magnetring 9 mit der Aufnahme 19 stoffschlüssig verbunden, so dass eine Baueinheit entsteht, in der die magnetischen Polpaare 7, 8 sowie die Induktionsspule 18 vereint sind.

Die Anordnung der magnetischen Polpaare 7, 8 auf dem Magnetring 9 ist bezogen auf die Klauen 10, 11 des Klauenrings 14 so gewählt, dass der erste magnetische Pol, beispielsweise der Nordpol, des ersten Polpaars 7 dem radialen Abschnitt 12 der ersten Klaue 10 gegenübersteht und der zweite magnetische Pol des in Umfangsrichtung benachbarten zweiten Polpaars 8, in diesem Fall ein Südpol, zwischen der ersten Klaue 10 und der in Umfangsrichtung benachbarten zweiten Klaue 11 angeordnet ist. Die zweite Klaue 11 steht einem bezogen auf den Nordpol des ersten Polpaars 7 gleichnamigen Pol, also ebenfalls einem Nordpol, der bezogen auf die erste Klaue 10 in Umfangsrichtung übernächsten, bildlich nicht dargestellten Klaue gegenüber.

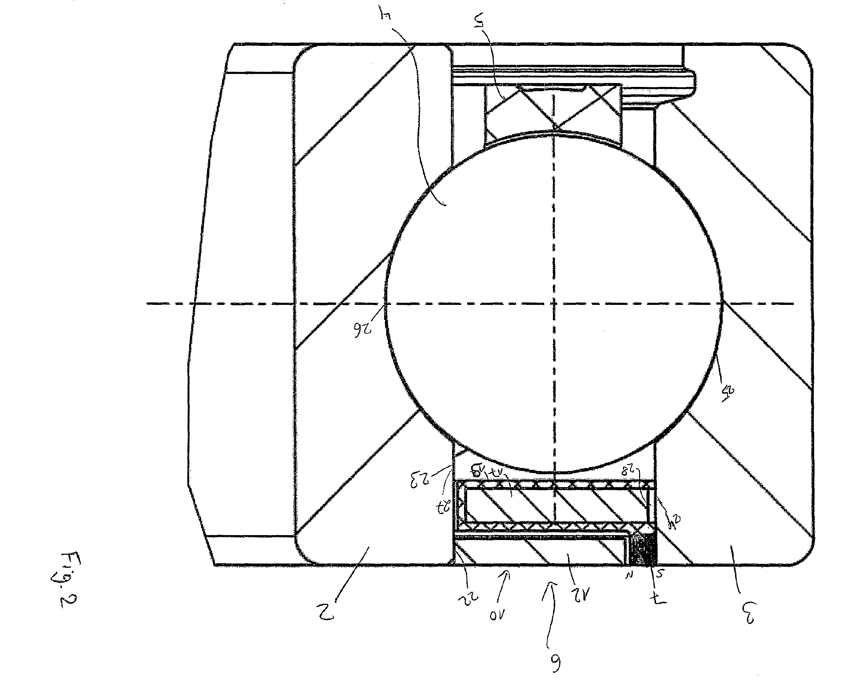

Fig. 2 zeigt eine Querschnittsansicht des Lagers 1 in einer montierten Stellung, wobei die Schnittebene so gelegt ist, dass die erste Klaue 10 und beide magnetische Pole des ersten magnetischen Polpaars 7 erkennbar sind. Dabei weist ein Nordpol des ersten Polpaars 7 unter Einhaltung eines Luftspaltes auf den radialen Abschnitt 12 der ersten Klaue 10, während der Südpol des ersten Polpaars 7 an dem zweiten Lagerring 3 anliegt. Die zweite Klaue 11 sowie das zweite magnetische Polpaar 8 befinden sich unterhalb der Papierebene der Darstellung von Fig. 2.

Die Klauen 10, 11 des Klauenrings sowie das gesamte Korpus 14 des Klauenrings sind mit einer Kante 22 des Klauenrings an einer äußeren Mantelfläche 23 des ersten Lagerrings 2 mittels Presssitz befestigt.

Die Aufnahme 19 mit der Induktionsspule 17 sowie das erste magnetische Polpaar 7 sind an dem zweiten Lagerring 3 ebenfalls mittels Presssitz festgelegt. Dabei liegt der Südpol des ersten magnetischen Polpaars 7 unmittelbar an dem magnetisch leitenden Korpus des zweiten Lagerrings 3 an, so dass eine magnetisch leitende Verbindung zwischen dem ersten magnetischen Polpaar 7 und einem magnetisch leitenden Abschnitt 24 des zweiten Lagerrings 3 ausgebildet wird. Dieser magnetisch leitende Abschnitt 24 erstreckt sich von dem Südpol des ersten magnetischen Polpaars 7 bis zu einer ersten Laufbahn 25, auf der der Wälzkörper 4 mit dem Korpus des zweiten Lagerrings 3 eine Kontaktellipse ausbildet, in deren Bereich eine weitere magnetisch leitende Verbindung des zweiten Lagerrings 3 zu dem Korpus des Wälzkörpers 4 ausgebildet ist.

Der Wälzkörper 4 läuft entlang einer zweiten Laufbahn 26 an dem ersten Lagerring 2 ab, so dass im Bereich der zweiten Laufbahn 26 eine weitere Kontaktellipse zwischen dem Korpus des Wälzkörpers 4 und dem Korpus des ersten Lagerrings gebildet wird und eine weitere magnetisch leitende Verbindung entsteht. Zwischen der zweiten Laufbahn 26 und dem Abschnitt, an dem die Kante 22 der Klaue 10 an dem Korpus des ersten Lagerrings 2 anliegt, wird ein magnetisch leitender Abschnitt 27 des ersten Lagerrings 2 ausgebildet.

Ein die Induktionsspule 17 umlaufender magnetischer Kreis wird dann ausgehend von dem Südpol des ersten Polpaars 7 zu dem ungleichnamigen zweiten Pol, nämlich dem Nordpol, des gleichen ersten Polpaars 7 über den magnetisch leitenden Abschnitt 26 an dem Korpus des zweiten Lagerrings, das Korpus des Wälzkörpers 4, den magnetisch leitenden Abschnitt 27 an dem Korpus des ersten Lagerrings 2 über den radialen Abschnitt 12 der Klaue 10 zu dem Nordpol des ersten Polpaars 7 geschlossen. Entsprechend bildet sich ein gleichsinnig die Induktionsspule 17 umlaufenden magnetischer Kreis bei dem bildlich nicht dargestellten, bezogen auf das erste Polpaar 7 übernächsten Polpaar aus. Bei der relativen Drehung der beiden Lagerringe 2, 3 wird die Induktionsspule 17 von einem sich ändernden magnetischen Fluss umgeben, der in der Induktionsspule 17 eine Wechselspannung erzeugt. Diese Wechselspannung kann zur Erfassung der relativen Drehung, insbesondere der Drehgeschwindigkeit, als auch zur Energieerzeugung herangezogen werden.

Die Spulennut 18 ermöglicht die Bildung eines Hohlraums 28 zu der Mantelfläche des zweiten Lagerrings 3 im Bereich des magnetisch leitenden Abschnittes 24. Für die Induktionsspule 17 steht in radialer Richtung im wesentlichen der gesamte Zwischenraum zwischen den beiden Lagerringen 2, 3 zur Verfügung. In axialer Richtung kann die Induktionsspule 17 unter Ausnutzung des Raumes zwischen dem radialen Abschnitt 12 der Klaue 10 und dem Wälzkörper 4 angeordnet werden. Der Hohlraum 28 kann durch das Kunststoff-Material der Aufnahme 19 ausgefüllt sein, so dass die Induktionsspule 17 allseitig von dem Kunststoff der Aufnahme 19 umgeben angeordnet ist. Es versteht sich, dass der das erste magnetische Polpaar 7 ausbildende Stabmagnet ebenfalls in den Hohlraum 28 hineinragen kann.

Die Aufnahme 19 für die Induktionsspule 17 bildet mit dem radialen Abschnitt 12 der Klaue einen dünnen Spalt aus, der als Dichtspalt vorgesehen sein kann. Dieser Spalt geht in einen weiteren Spalt über, den die Aufnahme mit der Mantelfläche des ersten Lagerrings 2 ausbildet. Es versteht sich dabei, dass an der Aufnahme 19 noch eine Dichtlippe einer Dichtung vorgesehen sein kann.

Die Klauen 10, 11 sowie das kreisringförmige Korpus 14 des Klauenrings schließen im wesentlichen bündig mit der Stirnfläche des ersten Lagerrings 2 ab. Der Klauenring 14 ist an der zylindrischen Mantelfläche des ersten Lagerrings 2 befestigt, ohne dass an der Mantelfläche baulichen Veränderungen zur Aufnahme des Klauenrings 14 vorgenommen wurden. Die Baueinheit mit dem Magnetring 9 und der Induktionsspule 17 in der Aufnahme 19 schließt ebenfalls bündig mit der Stirnfläche des zweiten Lagerrings 3 ab und ist an der zylindrischen Mantelfläche des zweiten Lagerrings 3 festgelegt. Insgesamt ergibt sich eine im wesentlichen bauraumneutrale Energieversorgungseinheit 6, die die Ausbildung einer hohen Anzahl von Windungen in der Induktionsspule 17 ermöglicht.

Bei dem vorstehend beschriebenen Ausführungsbeispiel lag der magnetische Südpol des ersten Polpaars 7 des Magnetrings 9 unmittelbar an einem Abschnitt der Mantelfläche des zweiten Lagerrings 3 an. Ebenfalls lag die Klaue 10 mit der Kante 22 unmittelbar an einem Abschnitt der Mantelfläche des ersten Lagerrings 2 an. In beiden Fällen bilden sich Grenzflächen zwischen der jeweiligen Mantelfläche und dem magnetischen Pol des Polpaars 7, 8 bzw. der Klaue 10 aus. Es versteht sich, dass auch ein magnetisch leitendes Kontaktelement vorgesehen sein kann, das die magnetische Leitfähigkeit im Bereich der Grenzfläche verbessert.

Bei dem vorstehend beschriebenen Ausführungsbeispiel lag die Klaue 10 mit der Kante 22 an der Mantelfläche des ersten Lagerrings 2 an, so dass eine im wesentlichen linienhafte Verbindung zu dem Korpus des ersten Lagerrings 2 ausgebildet wurde. Es versteht sich, dass auch eine im wesentlichen flächige Verbindung zu dem ersten Lagerring 2 ausgebildet sein kann, beispielsweise, indem die Klaue 10 abschnittsweise auf der Stirnfläche des ersten Lagerrings 2 aufliegt oder indem die Klaue einen axial abgestellten Abschnitt ausweist, der an der Mantelfläche des ersten Lagerrings 2 flächig anliegt.

Es versteht sich weiter, dass die Klaue 10 an dem auf den magnetischen Pol des ersten Polpaars 7 weisenden Endabschnitt einen axial abgestellten Führungsabschnitt aufweisen kann, um das Schließen des magnetischen Kreises zu dem magnetischen Pol zu verbessern.

Bei dem vorstehend beschriebenen Ausführungsbeispiel war zwischen benachbarten Klauen 10, 11 ein Zwischenabschnitt 15 angeordnet. In diesem Zwischenabschnitt 15 kann eine radiale Schlitzung vorgesehen sein, die das kreisringförmige Korpus des Klauenrings unterbricht. Alternativ oder ergänzend hierzu kann in dem Zwischenabschnitt 15 eine Durchbrechung, insbesondere eine Durchgangsbohrung, vorgesehen, sein, die das Auftreten von Wirbelströmen zwischen benachbarten Klauen 10, 11 unterdrückt.

Bei dem vorstehend beschriebenen Ausführungsbeispiel waren die ersten Klauen 10, 11 des Klauenrings 14 mittels der Zwischenbereiche 15 zu dem im wesentlichen kreisringförmigen Korpus 14 des ersten Klauenrings verbunden. Es versteht sich, dass die Zwischenbereiche 15 auch fortgelassen sein können, so dass der erste Klauenring aus einer umlaufenden Abfolge von miteinander nicht mehr verbundenen einzelnen Klauen ausgebildet ist. Die einzelnen Klauen des Klauenrings können ebenfalls durch einen Zwischenbereich 15 zu einem einzigen Klauenring verbunden sein, wobei der Zwischenbereich 15 aus einem magnetisch nicht-leitenden Material, beispielsweise einem Kunststoff ausgebildet ist. Insbesondere können die flach ausgebildeten radialen Abschnitte 12, 13 der Klauen 10, 11 an den Seitenkanten in Führungsnuten in dem Kunststoff eingeführt und in diesen Führungsnuten radial verschieblich aufgenommen sein, um eine feste Anlage an den magnetisch leitenden Abschnitt 27 des Korpus des ersten Lagerrings 2 ausbilden zu können.

### Bezugszeichenliste

- 1: Lager
- 2: erster Lagerring
- 3: zweiter Lagerring
- 4: Wälzkörper
- 5: Käfig
- 6: Energieerzeugungseinheit
- 7: erstes Polpaar
- 8: zweites Polpaar
- 9: Magnetring
- 10: erste Klaue
- 11: zweite Klaue
- 12: radialer Abschnitt der ersten Klaue 10
- 13: radialer Abschnitt der zweiten Klaue 11
- 14: Klauenring
- 15: Zwischenabschnitt
- 16: Abschnitt des Magnetrings
- 17: Induktionsspule
- 18: Spulennut
- 19: Aufnahme
- 20: Stirnfläche des Magnetrings 9
- 21: Schenkelfläche der Aufnahme 19
- 22: Kante des Korpus 14 des Klauenrings
- 23: Mantelfläche des ersten Lagerrings
- 24: magnetisch leitender Abschnitt des zweiten Lagerrings 3
- 25: erste Laufbahn
- 26: zweite Laufbahn
- 27: magnetisch leitender Abschnitt des ersten Lagerrings 2
- 28: Hohlraum

## Patentansprüche

1. Lager mit einem ersten Lagerring (2), einem zweiten Lagerring (3) und einem zwischen den beiden Lagerringen (2, 3) angeordneten Wälzkörper (4), sowie mit einer Energieerzeugungseinheit (6), wobei die Energieerzeugungseinheit (6) umfasst:
eine entlang eines Umfangs des zweiten Lagerrings (3) umlaufende Abfolge von magnetischen Polpaaren (7, 8),
einen an dem ersten Lagerring (2) befestigten Klauenring (14) mit einer entlang eines Umfangs des ersten Lagerrings (2) umlaufenden Abfolge von Klauen (10, 11),
eine magnetische Induktionsspule (17),
wobei sich von einem ersten magnetischen Pol des ersten Polpaars (7) über eine erste Klaue (10) des Klauenrings (14) ein geschlossener magnetischer Kreis schließt,
wobei die erste Klaue (10) des Klauenrings (14) in magnetisch leitender Verbindung mit einem magnetisch leitenden Abschnitt (27) des Korpus des ersten Lagerrings (2) angeordnet ist,
wobei die magnetischen Pole der Polpaare (7, 8) in magnetisch leitender Verbindung mit einem magnetisch leitenden Abschnitt (24) des Korpus des zweiten Lagerrings (3) angeordnet sind,
wobei,
der magnetische Kreis im wesentlichen über die beiden magnetischen Abschnitte (24, 27) und den Wälzkörper (4) geschlossen wird,
**dadurch gekennzeichnet, dass**
der magnetische Kreis die Induktionspule (17) umläuft.

2. Lager nach Anspruch 1, **dadurch gekennzeichnet, dass** die Induktionsspule (17) und die Magnete (7, 8) zu einer gemeinsamen Baueinheit zusammengefasst sind, die an dem zweiten Lagerring (3) befestigt ist.

3. Lager nach Anspruch 1 oder 2, **dadurch gekennzeichnet, dass** der Klauenring ein kreisringförmiges Korpus (14) mit einer radialen Schlitzung aufweist.

4. Lager nach einem der Ansprüche 1 bis 3, **dadurch gekennzeichnet, dass** ein magnetisch leitendes Kontaktelement vorgesehen ist.

5. Lager nach Anspruch 4, **dadurch gekennzeichnet, dass** das magnetisch leitende Kontaktelement einen flüssigen oder pastösen Kleber, insbesondere einen Eisen- oder Ferritpartikel enthaltenden Kleber, umfasst.

## Claims

1. Bearing having a first bearing ring (2) and a second bearing ring (3) and a rolling body (4) arranged between the two bearing rings (2, 3), and having a power generation unit (6), the power generation unit (6) comprising:
a sequence of magnetic pole pairs (7, 8) running peripherally along a circumference of the second bearing ring (3),
a claw ring (14) fastened to the first bearing ring (2) and having a sequence of claws (10, 11) running peripherally along a circumference of the first bearing ring (2),
a magnetic induction coil (17),
wherein a closed magnetic circuit is closed by a first magnetic pole of the first pole pair (7) via a first claw (10) of the claw ring (14),
wherein the first claw (10) of the claw ring (14) is arranged in a magnetically conductive connection with a magnetically conductive section (27) of the body of the first bearing ring (2),
wherein the magnetic poles of the pole pairs (7, 8) are arranged in a magnetically conductive connection with a magnetically conductive section (24) of the body of the second bearing ring (3),
wherein the magnetic circuit is closed substantially via the two magnetic sections (24, 27) and the rolling body (4),
**characterized in that**
the magnetic circuit runs peripherally around the induction coil (17).

2. Bearing according to Claim 1, **characterized in that** the induction coil (17) and the magnets (7, 8) are combined to form a common structural unit, which is fastened on the second bearing ring (3).

3. Bearing according to Claim 1 or 2, **characterized in that** the claw ring has a body (14) in the form of a circular ring and having a radial slit.

4. Bearing according to one of Claims 1 to 3, **characterized in that** a magnetically conductive contact element is provided.

5. Bearing according to Claim 4, **characterized in that** the magnetically conductive contact element comprises a liquid or paste-like adhesive, in particular an adhesive containing iron or ferrite particles.

## Revendications

1. Palier avec une première bague de palier (2), une deuxième bague de palier (3) et un corps de roulement (4) disposé entre les deux bagues de palier (2, 3), ainsi qu'avec une unité de production d'énergie (6), dans lequel l'unité de production d'énergie (6) comprend:
- une succession de paires de pôles magnétiques (7, 8) s'étendant le long d'une périphérie de la deuxième bague de palier (3),
- une bague à crabots (14) fixée à la première bague de palier (2), avec une succession de crabots (10, 11) s'étendant le long d'une périphérie de la première bague de palier (2),
- une bobine d'induction magnétique (17),
dans lequel un circuit magnétique fermé se ferme depuis un premier pôle magnétique de la première paire de pôles (7) sur un premier crabot (10) de la bague à crabots (14),
dans lequel le premier crabot (10) de la bague à crabots (14) est disposé en liaison magnétiquement conductrice avec une partie magnétiquement conductrice (27) du corps de la première bague de palier (2),
dans lequel les pôles magnétiques des paires de pôles (7, 8) sont disposés en liaison magnétiquement conductrice avec une partie magnétiquement conductrice (24) du corps de la deuxième bague de palier (3),
dans lequel le circuit magnétique est fermé essentiellement par les deux parties magnétiques (24, 27) et le corps de roulement (4),
**caractérisé en ce que** le circuit magnétique entoure la bobine d'induction (17).

2. Palier selon la revendication 1, **caractérisé en ce que** la bobine d'induction (17) et les aimants (7, 8) sont rassemblés en une unité de construction commune, qui est fixée à la deuxième bague de palier (3).

3. Palier selon la revendication 1 ou 2, **caractérisé en ce que** la bague à crabots présente un corps annulaire circulaire (14) avec une entaille radiale.

4. Palier selon l'une quelconque des revendications 1 à 3, **caractérisé en ce qu'**il est prévu un élément de contact magnétiquement conducteur.

5. Palier selon la revendication 4, **caractérisé en ce que** l'élément de contact magnétiquement conducteur comprend une colle liquide ou pâteuse, en particulier une colle contenant du fer ou des particules de ferrite.
